# FASCICULE DE BREVET EUROPEEN

(11) **EP 1 473 197 B1**
(45) Date de publication et mention de la délivrance du brevet: **01.10.2008**
(21) Numéro de dépôt: 04291054.7
(22) Date de dépôt: 22.04.2004
(51) Int. Cl.: B60R 19/18, B60R 19/34

(54) **Pare-chocs de véhicule automobile pourvu d'éléments d'absorption de choc, et véhicule automobile équipé d'un tel pare-chocs**
Kraftfahrzeug-Stossfänger mit energieabsorbierenden Elementen, und mit einem solchen Stossfänger ausgerüstetes Kraftfahrzeug
Motor vehicle bumper with energy absorbing elements, and motor vehicle equipped with such a bumper

(30) Priorité: 29.04.2003 FR 0305269
(43) Date de publication de la demande: 03.11.2004
(73) Titulaire: Faurecia Bloc Avant, 92000 Nanterre (FR)
(72) Inventeur: Riviere, Caroline, 25700 Valentigney (FR); Berne, Sébastien, 25200 Montbeliard (FR)
(74) Mandataire: Domenego, Bertrand

(56) Documents cités:
- EP-A- 1 369 308
- WO-A-97/03865
- FR-A- 2 145 045
- US-A1- 2003 038 488
- MOULIN J-P ET AL: "L'APPROCHE MODULAIRE BLOC ARRIERE: MAX" INGENIEURS DE L'AUTOMOBILE, RAIP. BOULOGNE, FR, no. 747, août 2001 (2001-08), pages 75-81, XP001078693 ISSN: 0020-1200

## Description

La présente invention concerne un pare-chocs pour véhicule automobile comprenant
- une poutre transversale ayant une face avant et une face arrière et, du côté de chaque extrémité latérale, une section de fixation à un longeron respectif ;
- deux éléments d'absorption d'énergie de choc, dont chacun est fixé à la poutre au niveau d'une section de fixation respective pour s'interposer entre la poutre et le longeron respectif ; et
- deux supports d'élément d'absorption, dont chacun assure la fixation d'un élément d'absorption respectif sur la poutre,
dans lequel la poutre présente, dans chaque section de fixation, un logement dont une partie est un évidement formé entre la face avant et la face arrière, et recevant l'élément d'absorption, de sorte qu'une face avant de l'élément d'absorption s'étend à proximité immédiate de la face avant de la poutre.

De tels pare-chocs sont par exemple décrits dans les documents FR 2 789 955, EP 0 716 961 et US 2003/0038488 qui est considéré comme étant l'état de la technique le plus proche de l'objet de l'invention et qui divulgue les caractéristiques du préambule de la revendication indépendante 1.

Suivant la structure de pare-chocs divulguée dans le premier document, les éléments d'absorption sont venus de moulage avec la poutre de pare-chocs. Dans la forme de réalisation du deuxième document, la face avant de la poutre est constituée par une peau surmoulée sur les éléments d'absorption.

De telles structures ne permettent pas, ou très difficilement, d'associer les éléments d'absorption à une poutre métallique ou hydride (ou bi-matériau). En outre, avec de telles structures, il est difficile d'obtenir des performances d'amortissement voulues avec un encombrement minimum, compte-tenu du fait qu'il est compliqué d'occuper tout l'espace disponible entre l'extrémité avant du longeron et la face avant de la poutre avec un élément d'absorption ainsi lié à la poutre.

L'invention a pour objet de résoudre ces inconvénients.

A cet effet, dans un pare-chocs conforme à l'invention, chaque support est un étrier de forme générale en U monté sur la poutre de telle sorte qu'il définit, de façon complémentaire avec les parois du logement respectif, une boîte de réception de l'élément d'absorption.

Suivant d'autres caractéristiques de l'invention, prises seules ou selon toutes les combinaisons techniquement envisageables :
- chaque élément d'absorption a une forme parallélépipédique, et chaque boîte de réception a une forme parallélépipédique complémentaire ;
- le logement a une section de forme générale en U, et est ouvert sur les faces supérieure et inférieure ;
- les parois parallèles de l'étrier définissent les faces supérieure et inférieure de la boîte ;
- la paroi transversale de l'étrier est fixée sur la partie de face avant de la poutre définissant le fond du logement ;
- l'étrier comporte, sur ses bords libres, des moyens de fixation au longeron respectif, de sorte que la poutre peut être fixée audit longeron par l'intermédiaire dudit étrier ;
- la poutre est de type hybride ;
- la poutre a une ossature métallique formée d'un profilé en U, dont les faces parallèles constituent les faces avant et arrière de la poutre, et un réseau de nervures en matière plastique surmoulé sur l'ossature, ledit réseau de nervures étant ménagé au moins partiellement entre lesdites faces ; et
- les éléments d'absorption ont une structure alvéolaire, notamment en nid d'abeille.

L'invention a également pour objet un véhicule automobile équipé d'un pare-chocs tel que décrit précédemment.

Un mode de réalisation de l'invention va maintenant être décrit plus en détail en référence aux dessins annexés, sur lesquels :
- la Figure 1 est une vue partielle en perspective d'un pare-chocs selon l'invention, l'un des deux éléments d'absorption d'énergie et son support étant représentés séparés de la poutre, tandis que l'autre élément et son support sont représentés montés ; et
- la Figure 2 est une vue en coupe, à plus grande échelle, dans le plan vertical 2-2, du pare-chocs de la Figure 1.

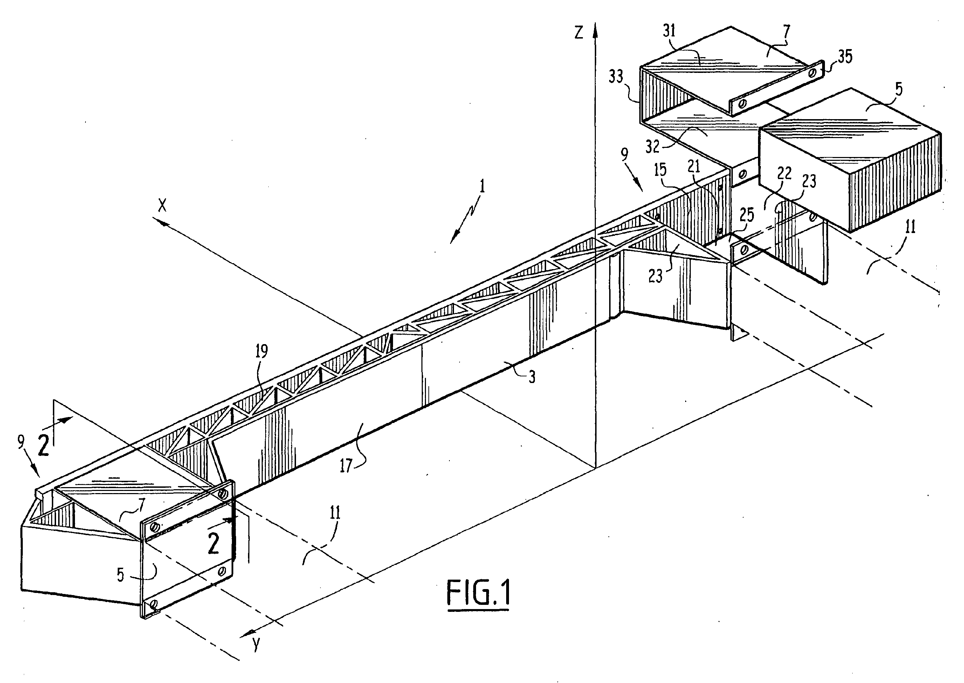

On a représenté sur la Figure 1, de façon partielle, un pare-chocs avant 1 de véhicule automobile, mais ce pare-chocs pourrait être indifféremment un pare-chocs arrière.

Ce pare-chocs est supposé orienté selon sa position montée sur le véhicule, cette orientation étant définie par rapport à un système d'axes X, Y, Z attaché au véhicule. De façon conventionnelle, l'axe X représente l'axe longitudinal du véhicule orienté d'arrière en avant, l'axe Y représente l'axe transversal du véhicule orienté de droite à gauche, et l'axe Z représente l'axe vertical du véhicule orienté de bas en haut.

Dans la description qui va suivre, sauf indication contraire, les termes « transversal », « longitudinal », « supérieur », « inférieur », « avant », « arrière », et autres termes d'orientation, s'entendront par rapport à ce système d'axes.

Le pare-chocs 1 a une forme allongée selon une direction correspondant à l'axe transversal Y du véhicule.

Le pare-chocs 1 comprend essentiellement une poutre transversale 3, deux éléments d'absorption (ou absorbeurs) 5, et deux supports d'absorbeur 7, dont chacun assure la fixation d'un absorbeur respectif sur la poutre 3.

Le pare-chocs comprend en outre une peau d'habillage en matière plastique (non représentée), recouvrant l'ensemble formé de la poutre 3, des absorbeurs 5, et des supports 7.

Lorsqu'il est monté sur le véhicule, le pare-chocs 1 est fixé, au niveau de deux sections latérales 9 de la poutre, aux extrémités de deux longerons respectifs 11.

On notera que le pare-chocs 1 est symétrique par rapport au plan médian longitudinal XZ, et qu'il en va de même, naturellement, des longerons 11. Ainsi, une seule des parties symétriques du pare-chocs sera décrite en détail dans ce qui suit. Pour plus de clarté, l'une de parties symétriques du pare-chocs (la partie gauche) a été représentée dans sa configuration assemblée, tandis que l'autre partie (la partie droite) est représentée de façon éclatée, la poutre 3, l'absorbeur 5, et le support 7 étant séparés.

L'absorbeur 5 a une forme de bloc parallélépipédique (ou autre), et peut être réalisé en matériau plastique ou composite, avec une structure alvéolaire, notamment en nid d'abeille.

La poutre 3 a une paroi avant 15 définissant une face avant, et une paroi arrière 17 définissant une face arrière, essentiellement parallèles et décalées longitudinalement l'une par rapport à l'autre. Dans l'exemple représenté, la poutre 3 est une poutre hydride, c'est-à-dire une poutre réalisée en au moins deux matériaux, en l'occurrence du métal et du plastique. Les parois avant 15 et arrière 17 constituent les branches parallèles d'une pièce d'ossature formée d'un profilé de section en U et réalisée en tôle métallique. La poutre 3 comprend en outre, s'étendant dans l'espace compris entre les parois 15, 17 de la pièce d'ossature, un réseau de nervures 19 en matière plastique surmoulée sur la pièce d'ossature.

Au niveau de la section de fixation 9, la poutre 3 présente un évidement 21 formé entre la paroi avant 15 et la paroi arrière 17, définissant une partie d'un logement 22 pour l'absorbeur 5. Le logement 22 est délimité à l'avant par la partie de la paroi avant 15, s'étendant sur la section de fixation 9, et latéralement par deux parois verticales 23 qui s'étendent dans un plan longitudinal. Ces parois 23 sont, dans l'exemple représenté, surmoulées avec le réseau de nervures 19 sur la pièce d'ossature, en particulier sur les parois avant 15 et arrière 17.

Le logement 22 a, dans un plan horizontal XY, une section en U, dont les branches parallèles sont définies par les parois latérales 23.

Le logement 22 a une forme de parallélépipède ouvert sur ses faces supérieure et arrière, et essentiellement ouvert sur sa face inférieure. La face inférieure du logement 22 est partiellement fermée par une partie 25 de bande horizontale du profilé en U formant la pièce d'ossature.

Le support 7 est formé comme un étrier de forme générale en U, par exemple par une bande métallique pliée. Ainsi, l'étrier 7 présente une plaque supérieure 31 et une plaque inférieure 32 parallèles, de forme rectangulaire identique, reliées par une plaque de liaison orthogonale 33 également rectangulaire. Chacune des plaques supérieure 31 et inférieure 32 présente, sur son bord libre opposé à la plaque de liaison 33, un rebord 35 de fixation au longeron, orthogonal et tourné vers l'extérieur.

L'étrier 7 définit, entre les plaques 31, 32, 33, un logement de forme et de dimensions correspondantes à l'absorbeur 5.

Les plaques supérieure et inférieure 31, 32, sont en outre de dimensions correspondantes aux dimensions des faces supérieure et inférieure du logement 22, tandis que la plaque de liaison 33 est de dimensions correspondantes à la paroi avant du logement 22, formée par la paroi avant 15 de la poutre.

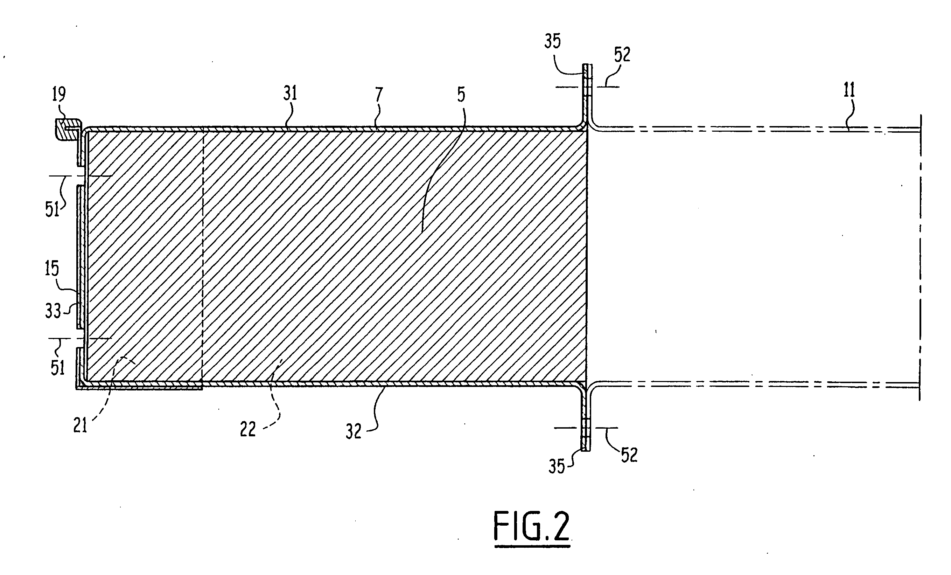

Comme représenté sur les Figures 1 et 2, lorsque le pare-chocs 1 est monté sur les longerons 11, l'absorbeur 5 est monté dans l'étrier 7, lui-même monté dans le logement 22. Dans cette configuration, l'étrier 7 et les parois latérales 23 du logement 22 définissent ensemble une boîte parallélépipédique, ouverte sur sa face arrière, qui contient l'absorbeur 5.

L'étrier 7 est fixé sur la poutre 3 au niveau de la paroi avant 15, par des moyens de fixation adaptés 51 (par exemple par soudage ou rivetage).

A son extrémité arrière, l'étrier 7 est fixé à l'extrémité du longeron correspondant 11 par des moyens adaptés 52 (par exemple par vissage).

Ainsi, et comme représenté sur la Figure 2, l'absorbeur 5 s'étend, dans la configuration assemblée entre l'extrémité avant du longeron 11 et la paroi avant 15 de la poutre 3, de telle façon que la face avant de l'absorbeur 5 s'étend à proximité immédiate de la paroi avant 15. Dans l'exemple représenté, la face avant de l'absorbeur 5 fait contact avec la plaque de liaison 33 de l'étrier, qui fait elle-même contact avec la paroi avant 15 de la poutre.

Grâce à cette disposition, en particulier du fait que l'évidement 21 est utilisé pour loger une partie de l'absorbeur 5, toute l'épaisseur de la poutre au niveau de la section 9 est exploitée pour améliorer les propriétés d'absorption d'énergie du pare-chocs. En particulier, une telle disposition des absorbeurs vise à conférer au pare-chocs des propriétés d'absorption convenant aux chocs à vitesse modérée, de l'ordre de 15 km/h.

On notera que le pare-chocs 1 est fixé au longeron 11 par l'intermédiaire de l'étrier 7, de sorte que l'étrier assure à la fois la fonction de support d'absorbeur et la fonction de fixation du pare-chocs au véhicule.

## Revendications

1. Pare-chocs pour véhicule automobile comprenant
- une poutre transversale (3) ayant une face avant (15) et une face arrière (17) et, du côté de chaque extrémité latérale, une section (9) de fixation à un longeron (11) respectif ;
- deux éléments (5) d'absorption d'énergie de choc, dont chacun est fixé à la poutre (3) au niveau d'une section de fixation respective (9) pour s'interposer entre la poutre (3) et le longeron respectif (11) ; et
- deux supports (7) d'élément d'absorption, dont chacun assure la fixation d'un élément d'absorption respectif (5) sur la poutre (3),
dans lequel la poutre (3) présente, dans chaque section de fixation (9), un logement (22) dont une partie est un évidement (21) formé entre la face avant (15) et la face arrière (17), et recevant l'élément d'absorption (5), de sorte qu'une face avant de l'élément d'absorption (5) s'étend à proximité immédiate de la face avant (15) de la poutre,
**caractérisé en ce que** chaque support (7) est un étrier de forme générale en U monté sur la poutre (3) de telle sorte qu'il définit, de façon complémentaire avec les parois (15, 23) du logement (22) respectif, une boîte de réception de l'élément d'absorption (5).

2. Pare-chocs suivant la revendication 1, **caractérisé en ce que** chaque élément d'absorption (5) a une forme parallélépipédique, et chaque boîte de réception a une forme parallélépipédique complémentaire.

3. Pare-chocs suivant la revendication 1 ou 2, **caractérisé en ce que** le logement (22) a une section de forme générale en U, et est ouvert sur les faces supérieure et inférieure.

4. Pare-chocs suivant la revendication 3, **caractérisé en ce que** les parois parallèles (31, 32) de l'étrier (7) définissent les faces supérieure et inférieure de la boîte.

5. Pare-chocs suivant l'une quelconque des revendications 1 à 4, **caractérisé en ce que** la paroi transversale (33) de l'étrier (7) est fixée sur la partie de face avant (15) de la poutre définissant le fond du logement (22).

6. Pare-chocs suivant l'une quelconque des revendications 1 à 5, **caractérisé en ce que** l'étrier (7) comporte, sur ses bords libres (35), des moyens (52) de fixation au longeron respectif, de sorte que la poutre (3) peut être fixée audit longeron (11) par l'intermédiaire dudit étrier (7).

7. Pare-chocs suivant l'une quelconque des revendications 1 à 6, **caractérisé en ce que** la poutre (3) est de type hybride.

8. Pare-chocs suivant la revendication 7, **caractérisé en ce que** la poutre (3) a une ossature métallique formée d'un profilé en U, dont les faces parallèles constituent les faces avant (15) et arrière (17) de la poutre (3), et un réseau de nervures (19) en matière plastique surmoulé sur l'ossature, ledit réseau de nervures (19) étant ménagé au moins partiellement entre lesdites faces (15, 17).

9. Pare-chocs suivant l'une quelconque des revendications 1 à 8, **caractérisé en ce que** les éléments d'absorption (5) ont une structure alvéolaire, notamment en nid d'abeille.

10. Véhicule automobile comportant un pare-chocs suivant l'une quelconque des revendications 1 à 9.

## Claims

1. Bumper bars for motor vehicles comprising
• a cross member (3) with a front face (15) and a rear face (17) and with a section (9) for fastening to a respective bar (11) on the side of each lateral end;
• two shock absorbing elements (5), each of which is fastened to the cross member (3) at the level of a respective fastening section (9) to be interposed between the cross member (3) and the respective bar (11); and
• two supports (7) for shock absorbing elements, each of which ensures that a respective shock absorbing element (5) is fastened to the cross member (3),
wherein in each fastening section (9) the cross member (3) has a housing (22), a part of which is a recess (21) formed between the front face (15) and the rear face (17) and receives the shock absorbing element (5), so that a front face of the shock absorbing element (5) extends in direct proximity to the front face (15) of the cross member,
**characterised in that** each support (7) is a generally U-shaped clamp mounted on the cross member (3) so that it defines a box to receive the shock absorbing element (5) in a complementary manner to the walls (15, 23) of the housing (22).

2. Bumper bars according to claim 1, **characterised in that** each shock absorbing element (5) is parallelepipedal in shape, and each receiving box has a complementary parallelepipedal shape.

3. Bumper bars according to claim 1 or 2, **characterised in that** the housing (22) has a generally U-shaped cross-section and is open on the upper and lower faces.

4. Bumper bars according to claim 3, **characterised in that** the parallel walls (31, 32) of the clamp (7) define the upper and lower faces of the box.

5. Bumper bars according to any one of claims 1 to 4, **characterised in that** the transverse wall (33) of the clamp (7) is fastened to the part of the front face (15) of the cross member, which defines the base of the housing (22).

6. Bumper bars according to any one of claims 1 to 5, **characterised in that** on its free edges (35) the clamp (7) comprises means (52) for fastening to the respective bar, so that the cross member (3) can be fastened to said bar (11) by means of said clamp (7).

7. Bumper bars according to any one of claims 1 to 6, **characterised in that** the cross member (3) has a hybrid structure.

8. Bumper bars according to claim 7, **characterised in that** the cross member (3) has a metal frame formed from a U-shaped section, the parallel faces of which form the front face (15) and rear face (17) of the cross member (3), and a lattice of ribs (19) made of plastic material moulded onto the frame, wherein the lattice of ribs (19) is disposed at least partially between said faces (15, 17).

9. Bumper bars according to any one of claims 1 to 8, **characterised in that** the shock absorbing elements (5) have a cellular structure, in particular a honeycomb structure.

10. Motor vehicle comprising bumper bars according to any one of claims 1 to 9.

## Patentansprüche

1. Stoßfänger für Kraftfahrzeug, enthaltend
- einen Querträger (3) mit einer vorderen Seite (15) und einer hinteren Seite (17) und an jedem seitlichem Ende einem Abschnitt (9) zur Befestigung an jeweils einem Längsträger (11);
- zwei Elemente (5) zum Absorbieren der Stoßenergie, wovon jedes an dem Querträger (3) im Bereich eines jeweiligen Befestigungsabschnitts (9) befestigt ist, um zwischen dem Querträger (3) und dem jeweiligen Längsträger (11) angeordnet zu sein; und
- zwei Träger (7) für das absorbierende Element, von denen jeder die Befestigung eines jeweiligen absorbierenden Elements (5) an dem Querträger (3) sicherstellt,
wobei der Querträger (3) in jedem Befestigungsabschnitt (9) eine Aufnahme (22) aufweist, von der ein Teil eine Ausnehmung (21) ist, die zwischen der vorderen Seite (15) und der hinteren Seite (17) gebildet ist und das absorbierende Element (5) derart aufnimmt, dass eine vordere Fläche des absorbierenden Elements (5) sich in unmittelbare Nähe der vorderen Seite (15) des Querträgers erstreckt, **dadurch gekennzeichnet, dass**
jeder Träger (7) ein allgemein U-förmiger Bügel ist, der an dem Querträger (3) so montiert ist, dass er auf komplementäre Weise mit den Wänden (15, 23) der jeweiligen Aufnahme (22) ein Gehäuse zur Aufnahme des absorbierenden Elements (5) bestimmt.

2. Stoßfänger nach Anspruch 1, **dadurch gekennzeichnet, dass** jedes absorbierende Element (5) eine Parallelelepipedform hat und jedes Aufnahmegehäuse eine komplementäre Parallelelepipedform hat.

3. Stoßfänger nach Anspruch 1 oder 2, **dadurch gekennzeichnet, dass** die Aufnahme (22) einen allgemein U-förmigen Querschnitt hat und an der oberen und unteren Seite offen ist.

4. Stoßfänger nach Anspruch 3, **dadurch gekennzeichnet, dass** die parallelen Wände (31, 32) des Bügels (7) die obere und die untere Seite des Gehäuses bilden.

5. Stoßfänger nach einem der Ansprüche 1 bis 4, **dadurch gekennzeichnet, dass** die quergerichtete Wand (33) des Bügels (7) an dem Teil der vorderen Seite (15) des Querträgers befestigt ist, der den Boden der Aufnahme (22) bildet.

6. Stoßfänger nach einem der Ansprüche 1 bis 5, **dadurch gekennzeichnet, dass** der Bügel (7) an seinen freien Rändern (35) Mittel (52) zur Befestigung an dem jeweiligen Längsträger aufweist, derart, dass der Querträger (3) an dem Längsträger (11) mit Hilfe des Bügels (7) befestigbar ist.

7. Stoßfänger nach einem der Ansprüche 1 bis 6, **dadurch gekennzeichnet, dass** der Querträger (3) vom Typ Hybrid ist.

8. Stoßfänger nach Anspruch 7, **dadurch gekennzeichnet, dass** der Querträger (3) eine metallische Konstruktion, die aus einem U-förmigen Profil gebildet ist, deren parallele Seiten die vordere Seite (15) und die hintere Seite (17) des Querträgers (3) bilden, und ein Netz aus Rippen (19) hat, die aus Kunststoff an der Konstruktion aufgeformt sind, wobei das Netz aus Rippen (19) zumindest teilweise zwischen den Seiten (15, 17) ausgebildet ist.

9. Stoßfänger nach einem der Ansprüche 1 bis 8, **dadurch gekennzeichnet, dass** die absorbierenden Elemente (5) eine zellförmige Struktur, insbesondere in Form einer Bienenwabe, haben.

10. Kraftfahrzeug mit einem Stoßfänger nach einem der Ansprüche 1 bis 9.
